(19) Europäisches Patentamt
European Patent Office
Office européen des brevets

(11) **EP 4 239 701 A2**

(12) **EUROPEAN PATENT APPLICATION**

(43) Date of publication:
**06.09.2023 Bulletin 2023/36**

(51) International Patent Classification (IPC):
**H01M 4/02** (2006.01)

(21) Application number: **23180572.2**

(22) Date of filing: **23.06.2021**

(52) Cooperative Patent Classification (CPC):
**H01M 4/364; H01M 4/131; H01M 4/136;
H01M 4/525; H01M 4/5825;** H01M 2004/021;
H01M 2200/20; Y02E 60/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2020 FR 2006764**

(62) Document number(s) of the earlier application(s) in
accordance with Art. 76 EPC:
**21737000.6 / 4 173 062**

(71) Applicant: **SAFT**
**92300 Lavallois-Perret (FR)**

(72) Inventors:
• **TESSIER, Cécile**
**33520 BRUGES (FR)**
• **BERNARD, Patrick**
**33000 BORDEAUX (FR)**
• **KAMEN, Nechev**
**COCKEYSVILLE, 21030 (US)**
• **MARGEZ, Carine**
**PARKVILLE, 21234 (US)**
• **CHEN, Xilin**
**LUTHERVILLE TIMONIUM, 21093 (US)**
• **GOUSSET, Cédric**
**33000 BORDEAUX (FR)**
• **HERREYRE, Sylvie**
**33240 SAINT-ANDRE-DE-CUBZAC (FR)**

(74) Representative: **Hirsch & Associés**
**154 Boulevard Haussmann**
**75008 Paris (FR)**

Remarks:
This application was filed on 21-06-2023 as a
divisional application to the application mentioned
under INID code 62.

(54) **USE OF LITHIUM SECONDARY ELECTROCHEMICAL CELLS CONTAINING A BLEND OF A LITHIUM NICKEL OXIDE AND A LITHIUM MANGANESE IRON PHOSPHATE FOR AUTOMOTIVE APPLICATIONS**

(57) The use of a blend of a lithium nickel oxide and a lithium manganese iron phosphate as an active material composition in the cathode of a lithium secondary electrochemical cell for automotive applications, such as hybrid and electric vehicles. This blend allows decreasing the porosity of a lithium manganese iron phosphate-based cathode. It also allows improving the detectability of a gas release in the cell in case of an abnormal operation of the cell. It allows lowering the cell impedance at a low state of charge, typically less than 30 %, and reducing the impedance increase of the cell during the cell lifespan.

EP 4 239 701 A2

## Description

## Technical field

The invention pertains to the technical field of lithium secondary electrochemical cells used for powering electric vehicles and hybrid electric vehicles.

## Background of the invention

Electric (EV) and hybrid (HEV) vehicles are rapidly entering mainstream automotive markets. EVs require long range and long life while HEVs emphasize on good power and long life. All automotive applications are currently served by two mainstream technologies: 1) nickel oxide-based cathodes, such as nickel manganese cobalt oxides (NMC) or nickel cobalt aluminium oxides (NCA) or a combination of these two oxides and 2) lithium iron phosphate-based cathodes (LFP). Both solutions offer advantages but also have shortcomings.

NMC and NCA based Li-ion solutions provide the best energy thus the best range for EVs. A good NMC cell delivers in excess of 250 Wh/kg and 500 Wh/L. This allows automakers to design vehicles capable of 480 to 640 km (300 to 400 miles) range. However, nickel oxide-based solutions bring along issues as well. Nickel oxide cathode materials are notoriously highly reactive in abuse conditions. The drive for more energy and lower cost is pushing customers to use NMC and NCA cathode materials with high Ni content and lower Co content. Typical examples are formulations like NMC 6:2:2 and 8:1:1 with 60% and 80% nickel respectively. This very high nickel content materials behave considerably worse in abuse conditions. In thermal runaway NMC and NCA based cells exceed temperatures of 700°C and the use of such materials requires caution. In addition, nickel oxide cathodes have impedance limitations in both the transient state-of-charge (SOC) areas, where the materials undergo a phase change as well as in the low SOC (<30%) domain where Li diffusion is impeded. The later limitation effectively reduces the energy available at high power and at cold temperature. Additionally, the impedance of NMC and NCA cathodes increases over life of the battery and this requires oversizing of the full system up front to compensate for loss of power at end of life. Besides, a high impedance generates heat and limits the power that an EV or HEV vehicle can deliver.

LFP solution to a certain degree addresses the safety concern of EV customers. LFP cathodes do not thermally decompose and they do not contribute with heat during an abuse event. LFP cathodes also are better suited to provide stable impedance over the entire SOC range. The impedance of LFP cathodes is quite stable over life of the battery and the vehicle. The impedance stability contributes to a stable power performance of the EV or HEV vehicle. However, LFP has also some key drawbacks. Most importantly because LFP Li-ion cathodes operate at a lower potential LFP based Li-ion cells deliver around 30% less energy and power, respectively, compared to NMC and NCA solutions. The lack of excess Li in the LFP cathode forces the voltage of LFP-based system to rise suddenly during overcharge providing little warning for an event. The flat voltage of the system also makes it difficult and costly to manage SOC and keep the system within manageable SOC range.

Lithium manganese iron phosphates (LMFP) are other materials from the olivine family. Similarly to LFP, cells using LMFP are much better behaved during any abuse conditions. LMFP is characterized by two consecutive voltage plateaus at 3.5 V and 4.05 V vs. Li metal for the $Fe^{3+}/Fe^{2+}$ and $Mn^{4+}/Mn^{3+}$ couples respectively whereas LFP has an open-circuit voltage of 3.45 V vs. Li metal. LMFP-based cathodes should deliver a higher amount of energy than LFP-based cathodes. The challenge in using LMFP alone in automotive applications comes from the basic properties of the material. Despite the higher operating potential the specific capacity of LMFP is still limited to 170 mAh/gram. LMFP materials come at low tap density and they have an extremely high surface area (usually measured according to the BET technique). Because of its high surface area the electrode comprising LMFP material alone generally exhibits a high porosity, typically 40% or more. This high porosity value makes producing electrodes for high energy cells impossible and the LMFP material alone is unlikely to deliver the energy and thus the range required by electric vehicles. A lower porosity would allow a higher energy, a higher power density and a higher drive range. Therefore, there is a need for a lithium manganese iron phosphate-based cathode which would exhibit a lower porosity, and hence a higher tap density. Porosity values as low as 35%, preferably as low as 25% are sought. To the Applicant's knowledge, porosity values lower than 30% have not yet been achieved.

Further, it has been observed that when a LMFP-based cathode approaches or even exceeds 100% of SOC, it releases heat in a sudden manner. When the cell safety device associated to the cell is activated by the heat and stops the current, the cell may have already reached a high temperature, such as 130-140°C. At such a high temperature, the cell separator may start melting which causes the electrodes of opposed polarities to come into contact. This leads to an internal short-circuit which in turn may lead to a thermal runaway of the cell. The thermal runaway may finally lead to a complete destruction of the battery and exposure of the car driver to a fire hazard. The very quick gas evolution generated by the heat renders hazardous the use of LMFP as a cathode material of a lithium secondary electrochemical cell in real conditions of use of an electric vehicle. There is thus a need for a lithium secondary electrochemical cell having a LMFP-based cathode in which the gas evolution gradually occurs when the cell approaches or exceeds 100% SOC. This would allow a more predictable detection of the end of charge by the battery management system.

## Summary of the invention

To this end, the invention provides a blend of at least one lithium nickel oxide and at least one lithium manganese iron phosphate as a cathode active material composition of a lithium secondary electrochemical cell. The lithium secondary electrochemical cell may be part of a battery providing electric energy to an electric vehicle or a hybrid electric vehicle. It has been unexpectedly discovered that adding a lithium nickel oxide to the lithium manganese iron phosphate allows decreasing the porosity of the lithium manganese iron phosphate-based cathode. Porosity values lower than 40% and typically lower or equal to 35% and even lower or equal to 30% may be obtained. The benefit of reducing the cathode porosity is a higher energy density of the battery, hence a larger drive range for the EV or HEV vehicle. An object of the present invention is thus the use of a lithium nickel

oxide in a lithium manganese iron phosphate-based cathode of a lithium secondary electrochemical cell for lowering the porosity of the lithium manganese iron phosphate-based cathode. An object of the present invention is thus a process of preparing a lithium manganese iron phosphate-based cathode of a lithium secondary electrochemical cell, said process comprising the step of blending a lithium nickel oxide with a lithium manganese iron phosphate with a view of lowering the porosity of the lithium manganese iron phosphate-based cathode.

Further, it has been unexpectedly discovered that adding a lithium nickel oxide to the lithium manganese iron phosphate allows lowering the rate at which energy is released. It is possible to obtain a gradual increase of gas pressure inside the cell when the cell approaches 100% SOC. This allows a slower activation of the cell safety device. The benefit is an improved driver safety. The battery management system is capable to detect the full charged state at an early stage and take the necessary steps to stop the charge before the onset of a thermal runaway. The benefit is an easier end-of-charge detection and an easier management of the battery by the battery management system. Another object of the invention is thus the use of a lithium nickel oxide in a lithium manganese iron phosphate-based cathode of a lithium secondary electrochemical cell for improving the detection of a gas flow that is released in the cell when the cell is overcharged. The gas flow may activate a safety device. The safety device may be activated by an excess pressure or an excess temperature inside the cell. The safety device may be an electrically conducting connection part electrically connecting at least one anode or at least one cathode of the cell to a terminal of the same polarity, wherein an excess pressure in the cell causes interruption of the current flow in the connection part. An object of the present invention is thus a process of preparing a lithium manganese iron phosphate-based cathode of a lithium secondary electrochemical cell, said process comprising the step of blending a lithium nickel oxide with a lithium manganese iron phosphate with a view of lowering the gas flow rate inside the cell when the cell is overcharged.

A further technical benefit associated with the use of a blend of a lithium nickel oxide and a lithium manganese iron phosphate is the possibility of obtaining a cathode active material composition exhibiting both a high gravimetric capacity and a low impedance. The low impedance is observed even at low values of state of charge, typically less than 30% SOC. Thanks to a lower impedance, high discharge currents, typically higher than C/2, may be expected even at low temperatures, C being the rated capacity of the cell. An extended range of state of charge allows providing higher energy. When combined with the possibility of discharging the cell at a higher current, it allows providing a higher range for the electric or hybrid vehicle. The invention also reduces the impedance increase over the cell lifespan. The cell lifespan is thus extended. Another object of the invention is thus the use of lithium manganese iron phosphate in a lithium nickel oxide-based cathode of a lithium secondary electrochemical cell for lowering the impedance of the cell at a state of charge of less or equal to 30%. An object of the present invention is thus a process of preparing a lithium nickel oxide-based cathode of a lithium secondary electrochemical cell, said process comprising the step of blending a lithium manganese iron phosphate with a lithium nickel oxide with a view of lowering the impedance of the cell at a state of charge of less or equal to 30%. Another object of the invention is the use of lithium manganese iron phosphate in a lithium nickel oxide-based cathode of a lithium secondary electrochemical cell for reducing the impedance increase of the cell during cycling of the cell. An object of the present invention is thus a process of preparing a lithium nickel oxide-based cathode of a lithium secondary electrochemical cell, said process comprising the step of blending a lithium manganese iron phosphate with a lithium nickel oxide with a view of reducing the impedance increase of the cell during cycling of the cell.

## Detailed description of embodiments

According to the invention the cathode of the lithium secondary electrochemical cell comprises a composition of active materials, said composition comprising a blend of at least one lithium nickel oxide and at least one lithium manganese iron phosphate. The lithium nickel oxide has a lamellar crystalline structure. The lithium manganese iron phosphate has the same crystalline structure as the olivine.

The lithium nickel oxide may be selected from :

$Li_w(Ni_xMn_yCo_zM_t)O_2$ (NMC) where $0.9 \leq w \leq 1.1$; $x>0$; $y>0$; $z>0$; $t \geq 0$; M being selected from the group consisting of Al, B, Mg, Si, Ca, Ti, V, Cr, Fe, Cu, Zn, Y, Zr, Nb, W, Mo and mixtures thereof, and
$Li_w(Ni_xCo_yAl_zM_t)O_2$ (NCA) where $0.9 \leq w \leq 1.1$; $x>0$;

y>0; z>0; t≥0; M being selected from the group consisting of B, Mg, Si, Ca, Ti, V, Cr, Mn, Fe, Cu, Zn, Y, Zr, Nb, W, Mo and mixtures thereof.

In one embodiment, the lithium nickel oxide is $Li_w(Ni_xMn_yCo_zM_t)O_2$ (NMC) where $0.9 \leq w \leq 1.1$; x>0; y>0; z>0; t ≥0; M being selected from the group consisting of Al, B, Mg and mixtures thereof. Preferably M is Al and $t \leq 0.05$. The majority transition element is preferably nickel, that is $x \geq 0.5$, even more preferably $x \geq 0.6$. A high amount of nickel in the lithium nickel oxide is preferable since it provides a high energy to the lithium nickel oxide.

The lithium nickel oxide may be $Li_w(Ni_xMn_yCo_z M_t)O_2$ where $0.9 \leq w \leq 1.1$; $x \geq 0.6$; $y \geq 0.1$; $z \geq 0.1$; $t \geq 0$; M being selected from the group consisting of Al, B, Mg, Si, Ca, Ti, V, Cr, Fe, Cu, Zn, Y, Zr, Nb, W, Mo and mixtures thereof.

For example, the lithium nickel oxide may be selected from $LiNi_{0.6}Mn_{0.2}Co_{0.2}O_2$ and $LiNi_{0.8}Mn_{0.1}Co_{0.1}O_2$.

In another embodiment, the lithium nickel oxide is $Li_w(Ni_xCo_yAl_zM_t)O_2$ where $0.9 \leq w \leq 1.1$; x>0; y>0; z>0; t≥0; M being selected from the group consisting of B, Mg and mixtures thereof. Preferably, $0.70 \leq x \leq 0.9$; $0.05 \leq y \leq 0.25$; $z \leq 0.10$; t=0 and x+y+z+t=1. More preferably $0.75 \leq x \leq 0.85$; $0.10 \leq y \leq 0.20$. The lithium nickel oxide may have formula $LiNi_{0.8}Co_{0.15}Al_{0.05}$.

The lithium manganese iron phosphate has the following formula:

$Li_xMn_{1-y-z}Fe_yM_zPO_4$ where $0.8 \leq x \leq 1.2$; $1 > 1-y-z \geq 0.5$; $0 < y \leq 0.5$; $0 \leq z \leq 0.2$ and M is selected from the group consisting of B, Mg, Al, Si, Ca, Ti, V, Cr, Co, Ni, Cu, Zn, Y, Zr, Nb and Mo. In one embodiment, $0.9 \geq 1-y-z \geq 0.7$ or $0.9 \geq 1-y-z \geq 0.75$. In one embodiment, $0.15 \geq y \geq 0.25$. Typical formulas of the lithium manganese iron phosphate are $LiMn_{0.8}Fe_{0.2}PO_4$, $LiMn_{0.7}Fe_{0.3}PO_4$, $LiMn_{2/3}Fe_{1/3}PO_4$ and $LiMn_{0.5}Fe_{0.5}PO_4$. The lithium manganese iron phosphate may be coated by a layer of a conductive material, such as carbon.

The composition of cathode active materials may contain active materials other than the at least one lithium nickel oxide and the at least one lithium manganese iron phosphate. Preferably, the composition of cathode active materials does not contain any active materials other than the at least one lithium nickel oxide and the at least one lithium manganese iron phosphate.

The lithium manganese iron phosphate-based cathode contains a blend of active materials which may comprise or consist of:

- from 90 to 50 wt.% or from 80 to 60 wt.% or from 70 to 60 wt.% of the lithium manganese iron phosphate with respect to the sum of the masses of all the active materials,
- from 10 to 50 wt. % or from 20 to 40 wt.% or from 30 to 40 wt.% of the lithium nickel oxide with respect to the sum of the masses of all the active materials.

The lithium manganese iron phosphate and the lithium nickel oxide may have the formulas described above.

The blend may consist of:

- about 90 wt.% of the lithium manganese iron phosphate with respect to the sum of the masses of all the active materials,
- about 10 wt.% of the lithium nickel oxide with respect to the sum of the masses of all the active materials. Such a blend exhibits a porosity of less than or equal to 35% and a capacity per surface unit of layer deposited on the current collector of 42 mg/cm² (3 mAh/cm²) for prismatic cells and 46.4 mg/cm² (3.3 mAh/cm²) for pouch cells.

The blend may also consist of:

- about 70 wt.% of the lithium manganese iron phosphate with respect to the sum of the masses of the active materials,
- about 30 wt.% of the lithium nickel oxide with respect to the sum of the masses of the active materials.

The blend may also consist of:

- about 50 wt.% of the lithium manganese iron phosphate with respect to the sum of the masses of the active materials,
- about 50 wt.% of the lithium nickel oxide with respect to the sum of the masses of the active materials. Such a blend exhibits a porosity of less than or equal to 25% and a capacity per surface unit of layer deposited on the current collector of 42.6 mg/cm² (3.36 mAh/cm²).

According to the invention, the lithium nickel oxide and the lithium manganese iron phosphate used are each in the form of a powder. The size distribution of the lithium nickel oxide particles is characterized by a first median volume diameter $Dv_{50}^1$. The size distribution of the lithium manganese iron phosphate particles is characterized by a second median volume diameter $Dv_{50}^2$. The term "equivalent diameter" of a particle designates the diameter of a sphere having the same volume as this particle. The term "median" means that 50% of the volume of the lithium nickel oxide (or lithium manganese iron phosphate) particles consists of particles having an equivalent diameter of less than the $Dv_{50}$ value and 50% of the volume of the lithium nickel oxide (or lithium manganese iron phosphate) particles consists of particles having an equivalent diameter greater than the $Dv_{50}$ val-

ue. The particle size measurement can be carried out using a laser particle size measuring technique.

In a preferred embodiment, the porosity of the blend is less than 30% or less than or equal to 28% or less than or equal to 26 % or less than or equal to 25 %. This particularly low porosity can be achieved by using a blend consisting of from 45 to 55 wt.% of the lithium nickel oxide and from 55 to 45 wt. % of the lithium manganese iron phosphate and by selecting a $Dv_{50}^2/ Dv_{50}^1$ ratio of less than or equal to 0.70 and a $Dv_{50}^2$ value of at least 500 nm or even at least 1.5 $\mu$m. In a preferred embodiment, the $Dv_{50}^2/ Dv_{50}^1$ ratio ranges from 0.15 to 0.60. In an even more prefered embodiment, the $Dv_{50}^2/ Dv_{50}^1$ ratio ranges from 0.30 to 0.50 or ranges from 0.30 to 0.40. A $Dv_{50}^2/ Dv_{50}^1$ ratio ranging from 0.14 to 0.53 may be obtained by using lithium manganese iron phosphate particles having a $Dv_{50}^2$ ranging from 1.7 $\mu$m to 3.2 $\mu$m and lithium nickel oxide particles having a $Dv_{50}^1$ ranging from 6.0 $\mu$m to 12.0 $\mu$m. Preferably, the lithium nickel oxide is of the NMC type.

Examples of preferred compositions leading to a blend exhibiting a porosity of less than 30% are as follows:

- from 45 to 55 wt.% of a lithium nickel oxide selected from:
  $Li_w(Ni_xMn_yCo_zM_t)O_2$ (NMC) where $0.9 \leq w \leq 1.1$; $0.6 \leq x$; $0.1 \leq y$; $0.1 \leq z$; $0 \leq t$; M being selected from the group consisting of Al, B, Mg, Si, Ca, Ti, V, Cr, Fe, Cu, Zn, Y, Zr, Nb, W, Mo and mixtures thereof;
- from 55 to 45 wt.% of a lithium manganese iron phosphate having the following formula :
  $Li_xMn_{1-y-z}Fe_yM_zPO_4$ where $0.8 \leq x \leq 1.2$; $0.6 \leq 1-y-z < 0.9$; $0 < y \leq 0.5$; $0 \leq z \leq 0.2$ and M is selected from the group consisting of B, Mg, Al, Si, Ca, Ti, V, Cr, Co, Ni, Cu, Zn, Y, Zr, Nb and Mo. Preferably, $0.7 \leq 1-y-z \leq 0.9$ or $0.75 \leq 1-y-z \leq 0.9$.

The electrode porosity is defined as the percentage of the volume of the pores to the geometric volume of the electrode. The volume of the pores encompasses the volume of the void present between the particles of the compounds in the layer deposited on the electrode current collector and the volume of the pores inside the particles of the compounds in the layer deposited on the electrode current collector. The pores inside the particles encompass the accessible pores and the inaccessible pores. The electrode porosity may be obtained through the two following methods:

- In a first method, the mercury technique is used to determine the volume of the pores. The geometric volume of the electrode is obtained by multiplying the thickness of the layer deposited on the current collector by the area coated by the layer. The porosity is obtained by calculating the ratio between the volume of the pores and the geometric volume of the electrode.

- In a second method, the theoretical density $d_{true}$ is calculated starting from the density of each compound in the layer deposited in the current collector. The bulk density $d_{bulk}$ is calculated knowing the mass and the volume of the layer deposited on the current collector. The relationship which links the porosity with the true density and with the bulk density is the following:

$$Porosity = 1-(d_{bulk}/d_{true})$$

Porosity of a cathode containing lithium manganese iron phosphate as the sole active material is generally at least 40%. The addition of only 10% by weight of lithium nickel oxide to lithium manganese iron phosphate is sufficient to reduce the cathode porosity down to about 35%. The addition of 50% by weight of lithium nickel oxide reduces the porosity down to about 25%. The cathode porosity of the blend generally ranges from 25 to 35%.

Thanks to the porosity reduction, the invention allows preparing a cathode containing a higher amount of lithium manganese iron phosphate per surface unit. The blend of LMFP with NMC or NCA overcomes the problem of low density by enabling low porosity electrodes to be achieved and thus makes high energy LMFP system possible.

The blend of the at least one lithium nickel oxide and the at least one lithium manganese iron phosphate also allows a more gradual release of gas in the cell container should the cell be subjected to an overcharge. Consequently, the pressure inside the cell increases gradually. The heat release occurs at a lower rate than when the lithium manganese iron phosphate is used as a sole active material. The gradual pressure increase allows the activation of a safety device before the temperature reaches a threshold value beyond which the risk of thermal runaway is significant. This result is unexpected since it is known in the art that phosphates of the olivine family are more stable thermally than lithium nickel oxides. Although it may be recognized that a LMFP-based cathode exhibits a better thermal stability than a nickel oxide-based cathode and releases less heat when it is exposed to an excessive external heat (overheat), this does not hold true when the LMFP-based cathode is exposed to an overcharge. During an overcharge of an LMFP-based cathode, the current keeps flowing through the cell, which is not the case when the cell is only exposed to an excessive external heat. The overcharge current is almost entirely used to oxidize the electrolyte. This oxidation reaction causes a sudden gas evolution which the present invention aims at moderating. The Applicant found that although lithium nickel oxides generate a higher amount of energy when overcharged the amount of energy is released in a more gradual manner thereby improving the detectability of an overcharge condition.

Gas is released at a rate allowing the activation of safety device before the onset of a thermal runaway. Typically, when the cathode contains a blend of a lithium nickel oxide and a lithium manganese iron phosphate the safety device activates at less than 130-140°C whereas when the cathode contains only lithium manganese iron phosphate the safety device activates at a temperature of at least 130°C. The gas evolution signal provided by the blend allows an earlier detection that the cell state of charge approaches 100%. The gas evolution signal provided by nickel oxide cathodes provides additional warning and mitigation tool for managing abuse of the system.

Another benefit of the invention is that the addition of LMFP offsets the impedance increase of nickel oxide cathodes at low state of charge maximizing the use of NMC or NCA cathode material at any rate or temperature. This way using the blended LMFP/NMC (or NCA) cathode energy densities within 3% to 5% of nickel oxide only cathodes can be achieved. The blend according to the invention may be used in the cathode of a lithium secondary electrochemical cell intended to power a hybrid or electric vehicle. The increase in energy density provides an extended range to the electric vehicle.

Additionally, the voltages of both LMFP and nickel oxide cathodes are well matched creating a SOC curve with slopes and plateaus. LMFP exhibits two voltage plateaus at 3.5 V/Li° and 4.05 V /Li° while NMC gives a slope from 3.5 V to the end-of-charge voltage. Such SOC curve enables easy SOC management. The excess Li in a nickel-based cathode allows for gradual voltage increase during overcharge and enables detection and prevention by electronics. The benefit is an easier end-of-charge detections and an easier management of the battery by the battery management system.

The lithium manganese iron phosphate and the lithium nickel oxide may be blended through any method known in the art, such as ball mill.

The cathode is prepared in a conventional manner. It consists of a conductive support used as a current collector which is coated with a layer containing the active material composition and further comprising a binder and a conductive material. The blend of active materials is generally mixed with one or more binders, the function of which is to bind the active material particles together and to bind them to the current collector on which they are deposited. The current collector is preferably a two-dimensional conductive support such as a solid or perforated strip, generally made of aluminium or of an aluminium alloy. The binders which can typically be used are selected from the group consisting of polyvinylidene fluoride (PVdF), polytetrafluoroethylene (PTFE), polyamideimide (PAI), polyimide (PI), styrene-butadiene rubber (SBR), hydrogenated nitril-butadiene rubber (HNBR), polyvinyl alcohol, polyacrylic acid, and a mixture thereof. The conductive material is generally carbon. A solvent is added to the resulting blend. A paste is obtained that is deposited on one or both sides of the current collector. The paste-coated current collector is laminated to adjust its thickness.

The composition of the paste deposited on the current collector may be as follows:

- from 75 to 96% of the active material composition, preferably from 80 to 90%.
- from 2 to 15% binder(s), preferably 4%;
- from 2 to 10% carbon, preferably 4%.

Cells are produced in conventional manner. The cathode, a separator and the anode are superposed. The assembly is rolled up (respectively stacked) to form the electrochemical jelly roll (respectively the electrochemical stack). A connection part is bonded to the edge of the cathode and connected to the current output terminal. The anode can be electrically connected to the can of the cell. Conversely, the cathode could be connected to the can and the anode to an output terminal. After being inserted into the can, the electrochemical stack is impregnated with an organic electrolyte. Thereafter the cell is closed in a leaktight manner. The can can also be provided in conventional manner with a safety valve causing the cell to open in the event of the internal gas pressure exceeding a predetermined value. The shape of the can is not limited, it can be a cylindric shape or a prismatic shape in the case of plane electrodes.

Several electrochemical cells may be connected in series or in parallel or in parallel-series or in series-parallel to form a module. The cells are combined within one container forming the envelope of the module, each cell being equipped with devices necessary for the electrical connection to the other cells of the module, for example in the form of metal strips (busbars), devices for measuring the operating parameters of the cell (temperature, voltage, current) and optionally safety devices (valve, membrane seal). The modules are connected together to form the battery which may be used to power a pure electric vehicle or an hydrid vehicle or a plug-in hybrid vehicle.

## Claims

1. Use of lithium manganese iron phosphate in a lithium nickel oxide-based cathode of a lithium secondary electrochemical cell for lowering the impedance of the cell at a state of charge of less or equal to 30%.

2. Use of lithium manganese iron phosphate in a lithium nickel oxide-based cathode of a lithium secondary electrochemical cell for reducing the impedance increase of the cell during cycling of the cell.

3. Use according to any of claims 1 to 2, wherein the cathode comprises a blend comprising:

- from 90 to 50 wt.%, preferably from 70 to 60 wt. % of a lithium manganese iron phosphate of formula $Li_xMn_{1-y-z}Fe_yM_zPO_4$ where $0.8 \leq x \leq 1.2$; $1 > 1-y-z \geq 0.5$; $0 < y \leq 0.5$; $0 \leq z \leq 0.2$ and M is selected from the group consisting of B, Mg, Al, Si, Ca, Ti, V, Cr, Co, Ni, Cu, Zn, Y, Zr, Nb and Mo;
- from 10 to 50 wt.%, preferably from 30 to 40 wt. % of a lithium nickel oxide selected from:

$Li_w(Ni_xCo_yAl_zM_t)O_2$ where $0.9 \leq w \leq 1.1$; $x > 0$; $y > 0$; $z > 0$; $t \geq 0$; M being selected from the group consisting of B, Mg, Si, Ca, Ti, V, Cr, Mn, Fe, Cu, Zn, Y, Zr, Nb, W, Mo and mixtures thereof and
$Li_w(Ni_xMn_yCo_zM_t)O_2$ where $0.9 \leq w \leq 1.1$; $x > 0$; $y > 0$; $z > 0$; $t \geq 0$; M being selected from the group consisting of Al, B, Mg, Si, Ca, Ti, V, Cr, Fe, Cu, Zn, Y, Zr, Nb, W, Mo and mixtures thereof.

4. Use according to claim 3, wherein the lithium nickel oxide is $Li_w(Ni_xMn_yCo_zM_t)O_2$ where $0.9 \leq w \leq 1.1$; $x \geq 0.6$; $y \geq 0.1$; $z \geq 0.1$; $t \geq 0$; M being selected from the group consisting of Al, B, Mg, Si, Ca, Ti, V, Cr, Fe, Cu, Zn, Y, Zr, Nb, W, Mo and mixtures thereof.

5. Use according to any of the claims 1, 2, 3 and 4 wherein the lithium secondary electrochemical cell is part of a battery providing electric energy to an electric vehicle or a hybrid electric vehicle.